# EUROPÄISCHE PATENTSCHRIFT

(11) **EP 0 900 584 B1**
(45) Veröffentlichungstag und Bekanntmachung des Hinweises auf die Patenterteilung: **24.04.2002**
(21) Anmeldenummer: 98112344.1
(22) Anmeldetag: 03.07.1998
(51) Int. Cl.: B01D 29/11, B01D 29/54, B01D 29/66

(54) **Rückspülfilter**
Backwash filter
Filtre à lavage à contre-courant

(30) Priorität: 09.08.1997 DE 19734588
(43) Veröffentlichungstag der Anmeldung: 10.03.1999
(73) Patentinhaber: Boll & Kirch Filterbau GmbH, 50170 Kerpen (DE)
(72) Erfinder: Sindorf, Heinrich, 41569 Rommerskirchen (DE); Rott, Willi, 53332 Bornheim (DE); Lennartz, Hans-Rüdiger, 50259 Pulheim (DE); Kandiah, Sivagnanam, 50259 Pulheim-Dansweiler (DE)
(74) Vertreter: Hennicke, Ernst Rüdiger,Dipl.-Ing.

(56) Entgegenhaltungen:
- WO-A-92/17263
- WO-A-96/02371
- DE-A- 3 405 179
- FR-A- 1 130 258
- FR-A- 2 128 742
- US-A- 2 985 306

## Beschreibung

Die Erfindung betrifft einen Rückspülfilter entsprechend der im Oberbegriff des Anspruchs 1 angegebenen Art.

Rückspülfilter, die zur Filterung von Flüssigkeiten und bevorzugt von Kraftstoffen und Schmierölen eingesetzt werden, sind seit langem in verschiedenen Ausführungen bekannt und in großen Stückzahlen im Einsatz. Sie weisen zwei oder mehr an einem gemeinsamen Filter-Grundgehäuse stehend angeordnete Filterkammern auf, die Filtereinsätze, zumeist in Form von Filterkerzen, aufnehmen (DE 18 01 441 C3, EP 0 361 217 B1, EP 0 656 223 A1). Dabei ist die Anordnung regelmäßig so getroffen, daß die Filterkammern mit den hierin befindlichen Filtereinsätzen unabhängig voneinander in Gegenstrom zum Filterbetrieb rückgespült werden können, während sich die anderen Filterkammern weiterhin im Filterbetrieb befinden.

Die zu Reinigungszwecken erforderliche Rückspülung der einzelnen Filterkammern und der in ihnen befindlichen Filtereinsätze erfolgt im allgemeinen mit Hilfe der Trübe, also der Schmutzflüssigkeit, kann aber auch mit Hilfe des bereits gefilterten Filtrats oder mit Hilfe von Trübe und Filtrat erfolgen, wobei die im Rückspülbetrieb ausgespülten Schmutzstoffe über einen Schlammablauf mit zugeordnetem Schlammablaßventil abgeführt werden. Für die Einzelrückspülung der Filterkammern weisen die bekannten Rückspülfilter eine von Hand oder zeit- oder differenzdruckgesteuerte Rückspülvorrichtung mit einem Rückspülventil auf, das im Inneren des Filtergehäuses bzw. des die Filterkammern tragenden Grundgehäuses angeordnet ist und sich in der Verbindung zwischen der in der Rückspülposition befindlichen Filterkammer und dem Schlammablauf befindet. In der Praxis bewährt haben sich Rückspülsysteme mit Drehschiebern, bei denen die Rückspülung unterstützend durch ein eingeleitetes Druckgas, zumeist Druckluft, erfolgt, welches bei Öffnen eines Druckgasventils die sich in der rückzuspülenden Filterkammer befindliche Rückspülflüssigkeit schlagartig beschleunigt, so daß ein den Abreinigungsprozeß des Rückspülmediums verbessernder Stoßeffekt erzielt wird (EP 0 361 217 B1).

Bei den vorstehend beschriebenen, gebräuchlichen Mehrkammern-Rückspülfiltern sind die Filterkammern feststehend am Filtergehäuse angeordnet und zur Rückspülung einzeln durch Ventilbetätigung auf Rückspülbetrieb schaltbar. Die Rückspülvorrichtung befindet sich im Inneren des die Filterkammern tragenden Filter-Grundgehäuses an schwer zugänglicher Stelle. Außerdem handelt es sich bei diesen Rückspülfiltern um verhältnismäßig groß und aufwendig bauende Filterapparate.

Der erfindungsgemäße Rückspülfilter geht im Oberbegriff von der DE 34 05 179 A1 aus, die einen Rückspülfilter zur Absorbtion von Öl aus einem Ö1/Wasser-Gemisch betrifft. Für die Absorbtion werden Filterkerzen verwendet, die aus einem am Umfang geschlossenen, zylindrischen Rohrstück bestehen, in dessen Innenraum ein für die Filterung geeignetes, ölabsorbierendes Material angeordnet ist, das über die gesamte Filterbetthöhe im Filterbetrieb längs durchströmt werden muß. Die Filterzylinder, die oben und unten offen sind und von unten angeströmt werden, sind in einer gemeinsamen Filtratkammer an einem um eine Mittelachse drehbaren Träger befestigt, der mittels eines Stellantriebs bewegbar ist. Auf einem Teilabschnitt der Umlaufbahn des Trägers ist eine Rückspülzone angeordnet. Diese Rückspülzone mit einem vom Filterkreislauf vollständig getrennten Rückspülkreislauf wird dadurch erzeugt, daß auf die freien Enden der Rohrstücke der Filterzylinder Rückspülschieber aufgeschoben werden. Für jeden Rückspülschieber muß daher, zusätzlich zu dem Stellantrieb, ein separater motorischer Antrieb außerhalb des Filtergehäuses angeordnet sein, dessen Antriebsenergie über Zahnstangen auf die Rückspülschieber übertragen wird. Im Rückspülkreislauf wird dann Spülwasser durch das Filterbett im Filterzylinder in beiden Richtungen hindurchgespült, um Ölablagerungen, die an dem ölabsorbierenden Material anhaften, abzuführen.

Aufgabe der Erfindung ist es vor allem, einen Rückspülfilter für die Filterung von Flüssigkeiten, vorzugsweise von Kraftstoffen, Schmierölen u.dgl., zu schaffen, der gegenüber den herkömmlichen Rückspülfiltern kompakter, wartungsfreundlicher und möglichst auch einfacher bauen kann.

Diese Aufgabe wird erfindungsgemäß dadurch gelöst, daß im Filterbetrieb die Trübe die Filtereinsätze von außen nach innen durchströmt, wobei der ausgefilterte Schmutz an der äußeren Oberfläche der Filtereinsätze abgelagert wird, und bei der Umlaufbewegung in der Rückspülzone für die Rückspülung eine von dem Filterkreislauf abgetrennte Rückspülkammer gebildet wird, in der die Filtereinsätze einzeln oder gruppenweise im Gegenstrom zum Filterbetrieb rückspülbar sind. Der erfindungsgemäße Rückspülfilter arbeitet mithin in umgekehrter Strömungsrichtung als der gattungsgemäße Stand der Technik. Da bei der Umlaufbewegung in der Rückspülzone eine abgetrennte und abgedichtete Rückspülkammer gebildet wird, während die Trübe in den anderen Bereichen der Umlaufbahn ohne Hinderung durch schmale Strömungsquerschnitte die einzelnen Filterkerzen, die nur Filtrat durchlassen, umspülen können, kann auch bei kontinuierlichem Filterbetrieb eine Rückspülung mit Druckgas beaufschlagtem Spülmedium durchgeführt werden. Der Rückspülkreislauf selbst kommt dabei ohne zusätzliche Antriebsmechanismen aus.

Zweckmäßig sind die Filtereinsätze des Rückspülfilters jeweils in einer eigenen Filterkammer angeordnet, wobei die Filterkammern auf dem Teilbereich der Umlaufbahn, auf dem die Filterung erfolgt, über einen ringsegmentförmigen Kanal, der an den gemeinsamen Trübeeinlaß angeschlossen ist, anströmbar sind. Die einzelnen Filtereinsätze bzw. die sie aufnehmenden Filterkammern sind vorteilhafterweise an einem gemeinsamen, von dem Stellantrieb angetriebenen Filterträger über die Umlaufbahn beweglich angeordnet.

Die Abreinigung des jeweiligen Filtereinsatzes im Rückspülbetrieb erfolgt in der bei der Umlaufbewegung im Bereich der Rückspülzone gebildeten Rückspülkammer. Eine Filterkammer bildet mithin in der Rückspülzone eine Rückspülkammer. Die sich jeweils in der Rückspülzone befindliche Rückspülkammer mit dem darin angeordneten Filtereinsatz ist von dem Filterkreislauf der anderen, im Filterbetrieb stehenden Filtereinheiten getrennt und wird im Rückspülbetrieb von innen nach außen abgereinigt. Diese Ausführung des Rückspülfilters ermöglicht eine kompakte Bauweise desselben und ermöglicht auch Bauvereinfachungen, da alle Filtereinheiten sich im Inneren des gemeinsamen Filtergehäuses befinden können. Zugleich läßt sich auch die Rückspülvorrichtung mit dem Rückspül- und Schlammablaßventil außenseitig am Filtergehäuse anbauen, wodurch sich ebenfalls Bauvereinfachungen und auch Vorteile bezüglich der Wartung der Rückspülvorrichtung und ihrer Ventile ergeben. Für eine etwaige Entlüftung der die Filtereinsätze aufnehmenden Filterkammern nach erfolgter Rückspülung kann für alle Filtereinheiten ein gemeinsamen Entlüftungsventil vorgesehen werden, insbesondere in der bekannten Ausführung als schwimmergesteuertes Entlüftungsventil. Bau- und Montagevereinfachungen lassen sich auch dadurch erreichen, daß durch Öffnen des Filtergehäuses alle Filtereinsätze zugänglich werden.

In bevorzugter Ausführung ist bei dem erfindungsgemäßen Rückspülfilter die Anordnung so getroffen, daß die einzelnen, von den Filtereinsätzen gebildeten Filtereinheiten mit Hilfe des Stellantriebs auf einer kreisbogenförmigen Umlaufbahn beweglich sind, auf der sich mindestens eine Rückspülzone befindet, obwohl grundsätzlich auch eine Gestaltung des Rückspülfilters möglich ist, bei der die einzelnen Filtereinheiten über eine von der Kreisbahn abweichende Umlaufbahn bewegt werden. Bei kreisbogenförmiger Umlaufbahn kann der Filterträger aus einem im Filtergehäuse angeordneten Drehkörper bestehen, an dem die Filtereinsätze um dessen Drehachse herum, vorzugsweise in gleichen Winkelabständen zueinander, angeordnet sind, wobei der Stellantrieb aus einem den Drehkörper um die Drehachse drehenden Drehantrieb besteht und die Rückspülzone sich über einen Teilumfang der kreisförmigen Umlaufbahn des Drehkörpers erstreckt. Vorzugsweise ist hierbei der Drehkörper mit über seinen Umfang herum in Bogenabständen zueinander angeordneten Filterkammern versehen, die jeweils einen Filtereinsatz aufnehmen und mit zu dem Trübeeinlaß und dem Filtratauslaß des Filtergehäuses sowie mit den der Rückspülung dienenden Durchflußkanälen versehen ist. Der Drehkörper ist zweckmäßig mit zu seiner Drehachse parallelen, die Filterkammern bildenden Taschen od.dgl. versehen. Dabei sind die Filterkammern zumindest an dem einen Ende des Drehkörpers, bevorzugt aber an den beiden Endbereichen desselben, zu der Innenseite des Filtergehäuses hin unter Bildung der Durchflußkanäle offen, wobei der Drehkörper in diesem Endbereich im Querschnitt etwa sternförmig ausgebildet sein kann. Weiterhin wird die Anordnung zweckmäßig so getroffen, daß im Filterbetrieb des Rückspülfilters die Filtereinsätze bzw. Filterkerzen von der über den Trübeeinlaß des Filtergehäuses zugeführten Schmutzflüssigkeit von außen nach innen durchströmt werden, wobei die Schmutzflüssigkeit zweckmäßig in den beiden Endbereichen den Filterkammern und damit den Filterkerzen zugeleitet wird, während das Filtrat aus den Innenräumen der Filtereinsätze bzw. Filterkerzen zu dem gemeinsamen Filtratauslaß des Filtergehäuses abgeleitet wird. Vorteilhafte Ausgestaltungsmerkmale des erfindungsgemäßen Rückspülfilters in der bevorzugten Ausführung mit einem um seine Drehachse drehbaren Drehkörper sind in den einzelnen Ansprüchen angegeben, auf die hier Bezug genommen werden kann.

Im allgemeinen genügt es, wenn in jeder Filterkammer des Rückspülfilters als Filtereinsatz nur eine einzige Filterkerze vorgesehen wird, obwohl selbstverständlich auch die Anordnung mehrerer, paralleler Filterkerzen möglich ist. Für die Rückspülung wird bei dem erfindungsgemäßen Rückspülfilter zweckmäßig mit einem druckgasbeaufschlagten Spülmedium gearbeitet, wie dies an sich bekannt ist. Dabei kann der Spülvorrichtung eine Druckgas-Speicherkammer zugeordnet sein, die durch Betätigung des Spülventils mit der in der Rückspülposition befindlichen, hier die Rückspülkammer bildenden Filterkammer verbunden wird, so daß die Rückspülung mit Hilfe des in dieser Kammer befindlichen Filtrats und/oder der Trübe durch stoßartige Druckluftbeaufschlagung unter guter Abreinigung des Filtereinsatzes bewirkt wird und folglich die Schmutzstoffe bei geöffnetem Schlammablaßventil über den Schlammablauf abgeführt werden. Das Spülventil und das Schlammablaßventil sowie die Druckgas-Speicherkammer können eine kompakte Baueinheit bilden, die, wie erwähnt, außenseitig am Ventilgehäuse lösbar angebaut werden kann.

Weitere vorteilhafte Ausgestaltungsmerkmale des erfindungsgemäßen Rückspülfilters sind in den einzelnen Ansprüchen angegeben und werden nachfolgend im Zusammenhang mit dem in der Zeichnung gezeigten Ausführungsbeispiel näher erläutert. In der Zeichnungen zeigen:
- Fig. 1: einen erfindungsgemäßen Rückspülfilter mit außenseitig angebauter Rückspülvorrichtung im Axialschnitt;
- Fig. 2, 3 und 4: jeweils den Rückspülfilter nach Fig. 1 in einem Querschnitt nach Linie II-II, III-III, IV-IV der Fig. 1.
- Fig. 5: im Längsschnitt den Drehkörper des erfindungsgemäßen Rückspülfilters ohne Filtereinsätze.

Zum Verständnis der Erfindung wird Bezug genommen auf die eingangs zum Stand der Technik genannten Druckschriften, insbesondere die EP 0 361 217 B1.

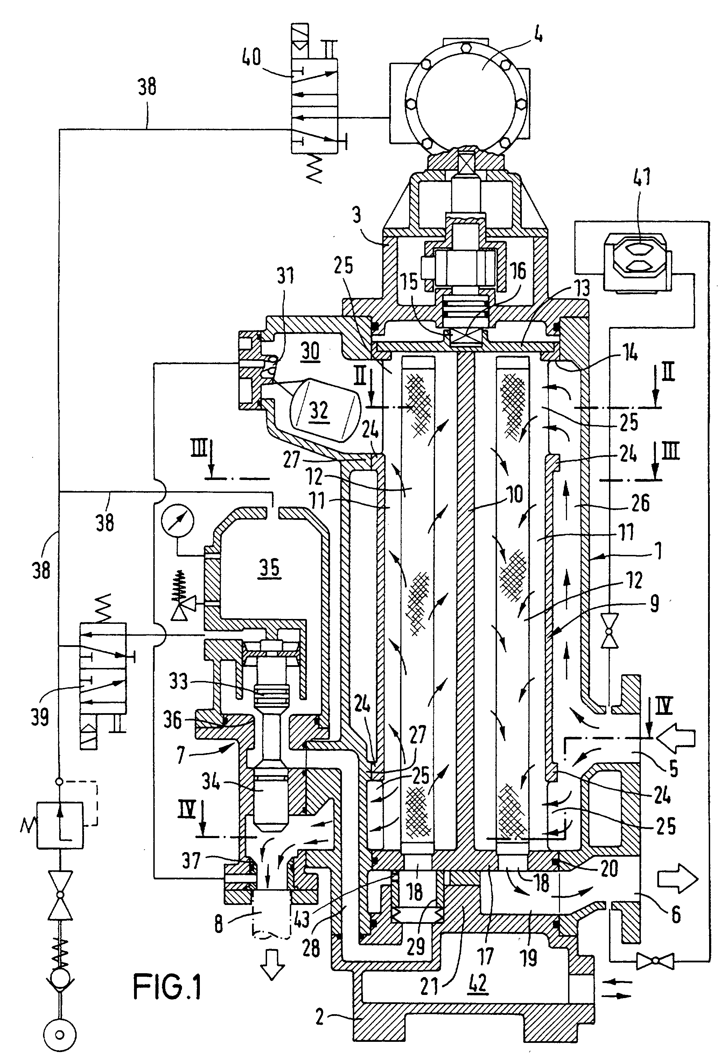

Der in den Fig. 1 bis 4 gezeigte Rückspülfilter weist ein angenähert zylindrisches Filtergehäuse 1 auf, das am Fuß ein lösbar angeschlossenes Fußstück 2 und am Kopf ein mit Flanschverschraubung ebenfalls lösbar angeschlossenes Kopfstück 3 trägt, welches seinerseits den Träger eines Stellantriebs in Gestalt eines Drehantriebs 4 bildet. Am Filtergehäuse 1 sind im unteren Bereich an einem Gehäuseflansch der Filter- bzw. Trübeeinlaß 5 und in verhältnismäßig dichtem Abstand darunter der Filtratauslaß 6 angeordnet. An der gegenüberliegenden Seite ist am Filtergehäuse 1 außenseitig die Rückspülvorrichtung 7 lösbar und auswechselbar angebaut, die somit an der Außenseite des Filtergehäuses gut zugänglich angeordnet ist. Der Schlammablauf der Rückspülvorrichtung 7 ist in Fig. 1 mit 8 bezeichnet.

Im Inneren des Filtergehäuses 1 ist als Filterträger ein Drehkörper 9 um seine Längsachse 10, die mit der Längsachse des Filtergehäuses 1 zusammenfällt, drehbar angeordnet, so daß er mit Hilfe des Drehantriebs 4 im Filtergehäuse 1 während des Filterbetriebs schrittweise gedreht werden kann. Der Drehkörper 9 weist auf seinem Umfang mehrere, hier vier in gleichen Umfangsabständen zueinander angeordnete Filterkammern 11 auf, die jeweils einen Filtereinsatz 12 in Gestalt einer Filterkerze aufnehmen, wobei die parallel zueinander und zur Drehachse 10 angeordneten Filtereinsätze bzw. Filterkerzen sich im wesentlichen über die gesamte Höhe des Drehkörpers erstrecken. Der Drehkörper 9 ist an seinen beiden Enden jeweils mit einem drehfest an ihm angeordneten Verschlußstück versehen, das die um die Drehachse 10 herumgruppierten Filterkammern 11 überdeckt. Das am oberen Ende des Drehkörpers 9 befindliche Verschlußstück besteht aus einer lösbar am Drehkörper befestigten Kupplungsplatte 13, die hier die Filterkammern 11 verschließt und die, wie aus Fig. 1 erkennbar, z.B. durch Verschraubung lösbar an einem Lagerring 14 angeordnet ist, der sich in einer zylindrischen Lagerbohrung am Kopfende des Filtergehäuses 1 abstützt und bei der Drehbewegung des Drehkörpers führt. Die den Drehkörper 9 hier schließende Kupplungsplatte 13 ist mittig mit einer unrunden, zur Plattenoberseite hin offenen Kupplungsöffnung 15 versehen, in die ein als Mehrkant ausgebildeter Kupplungszapfen 16 einfaßt, der sich auf der Abtriebswelle des Drehantriebs befindet, wodurch die antriebsmäßige drehschlüssige Kupplung zwischen Drehantrieb und Drehkörper hergestellt wird. Durch diese Kupplungsverbindung wird die Montage und Demontage des den Drehantrieb 4 tragenden Kopfstücks 3 erleichtert und die Möglichkeit geschaffen, den Drehkörper 9 mitsamt den Filtereinsätzen 12 nach oben oben aus dem Filtergehäuse 1 herauszunehmen bzw. von oben in dieses einzusetzen.

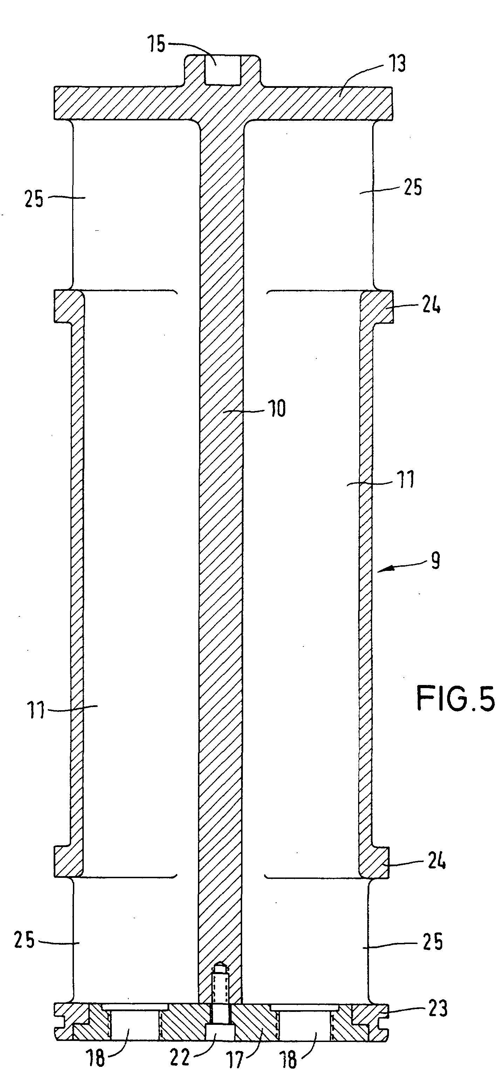

Das am anderen, unteren Ende des Drehkörpers drehfest angeordnete Verschlußstück besteht aus einer Lochplatte 17, die am Drehkörperende fest angeordnet ist und auf einem gemeinsamen Teilkreis aus Gewindebohrungen bestehende Plattenöffnungen 18 aufweist, in die die einzelnen Filtereinsätze bzw. Filterkerzen 12 mit ihren mit einem Außengewinde versehenen Fußende eingeschraubt sind, wobei die Innenräume der Filterkerzen an den Plattenöffnungen 18 mit einer gemeinsamen Filtratkammer 19 am darunterliegenden Fußstück 2 verbunden sind, die den Filtratauslaß 6 des Rückspülfilters aufweist. Die kreisrunde Lochplatte 17 ist an ihrem Außenumfang mit einer Umfangsdichtung in einer zylindrischen Lagerfläche 20 des Filtergehäuses 1 drehbar gelagert und mittig auf einem aufragenden Fußlager 21 des Fußstücks 2 drehbar abgestützt. Die Lochplatte 7 bildet also den Träger der Filtereinsätze 12 und dient zugleich zur Verbindung der Innenräume der Filtereinsätze mit der gemeinsamen Filtratkammer 19 und damit dem Filtratauslaß 6 des Rückspülfilters, wobei die Lochplatte zugleich der Drehverlagerung des Drehkörpers 9 im Filtergehäuse 1 dient. Abweichend von der Ausführungsform nach Fig. 1 kann gemäß Fig. 5 die Lochplatte 17 auch durch Axialverschraubung 22 mit dem Drehkörper 9 lösbar verbunden sein und an ihrem Umfang in einem fest mit dem unteren Ende des Drehkörpers 9 verbundenen Lagerring 23 gehalten sein, der in der ringförmigen Lagerfläche 20 des Filtergehäuses drehbar gelagert ist. Im Montagezustand befindet sich der Drehkörper mit der Lochplatte 17 zwischen dem Trübeeinlaß 5 und dem Filtratauslaß 6.

Die axialen Filterkammern 11 des Drehkörpers 9 sind jeweils über ihren größten Längenbereich in Umfangsrichtung geschlossen, werden also über den größeren Längenbereich der Filterkerzen von rohrförmigen Taschen od.dgl. gebildet, die an Lagerringen 24 auslaufen, so daß zwischen diesen Lagerringen und der Kupplungsplatte 13 bzw. der Lochplatte 17 zu dem inneren Umfangsraum des Filtergehäuses 1 hin offene Durchlaßöffnungen 25 gebildet werden, die im Filterbetrieb auf der Filtrierseite die Verbindung der Filterkammern 11 mit dem gemeinsamen Trübeeinlaß 5 herstellen. Aus Fig. 1 ist erkennbar, daß auf dem Längenbereich, an dem Filterkammern 11 über ihren ganzen Umfang geschlossen sind, die bogenförmigen Außenbegrenzungen der Filterkammern in einem Radialabstand zur Innenwandung des Filtergehäuses 1 liegen, so daß hier auf dem Umfangsbereich, auf dem im Filterbetrieb die Filterung erfolgt, ein ringsegmentförmiger Kanal 26 zwischen der Gehäusewand des Filtergehäuses 1 und dem Drehkörper gebildet wird, der der Verbindung des Trübeeinlasses 5 mit den jeweils im Filterbetrieb stehenden Filtereinsätzen zu den an den oberen und unteren Enden der Filterkammern angeordneten Durchlaßöffnungen 25 herstellt.

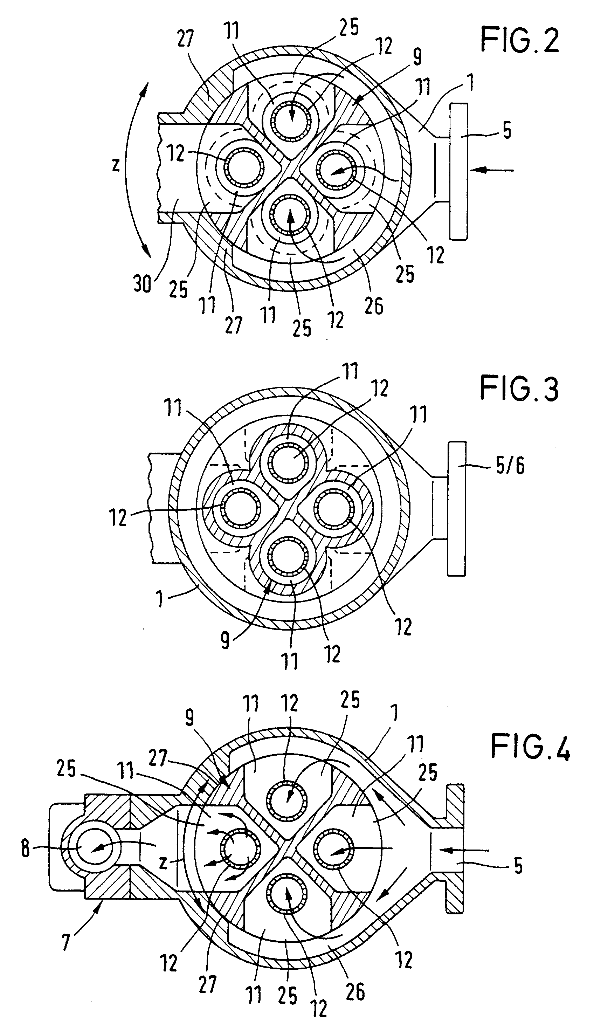

Die in den Filterkammern 11 am Drehkörper 9 in Parallelanordnung zueinander angeordneten Filtereinsätze 12 sind durch Drehbewegung des Drehkörpers 9 mit Hilfe des Drehantriebs 4 auf einer kreisbogenförmigen Umlaufbahn bewegbar, die auf mindestens einem Teilabschnitt ihrer Bogenlänge eine Rückspülzone für die Rückspülung der jeweils in dieser Rückspülzone befindlichen Filterkammer 11 bildet, die hier eine Rückspülkammer bildet, welche gegenüber dem Filterkreislauf zwischen dem Trübeeinlaß 5, den im Filterbetrieb stehenden Filterkammern 11 und dem Filtratauslaß 6 abgetrennt und abgedichtet ist. Dies erfolgt auf dem die Rückspülzone bildenden bogenförmigen Teilabschnitt der kreisbogenförmigen Umlaufbahn dadurch, daß auf diesem Teilabschnitt die in der Rückspülzone befindliche Filterkammer 11 durch die umlaufenden Lagerringe 24 an ringsegmentförmigen Gegenlagerflächen 27 dichtend und drehbeweglich abstützen, so daß hierdurch die Flüssigkeitsverbindung zu dem ringsegmentförmigen Kanal 26 und über diesen zum Trübeeinlaß 5 und zum Filtratauslaß 6 geschlossen wird. Außerdem ist die in der Rückspülzone befindliche Filterkammer 11 an ihrer Unterseite gegenüber der Filtratkammer 19 und dem Filtratauslaß 6 am Fußstück 2 abgedichtet. Die in der Rückspülzone befindliche Filterkerze ist hier an einen Rückspülkanal 28 im Fußstück 2 angeschlossen; dieser endet unterhalb der Plattenöffnung 18, an der die in der Rückspülzone befindliche Filterkerze durch Verschraubung angeschlossen ist. Demgemäß ist bei dem gezeigten Rückspülfilter die Anordnung so getroffen, daß von den vier Filterkammern bzw. den vier Filtereinsätzen 12 jeweils sich drei Filtereinsätze im Filterbetrieb befinden, während sich die vierte Filterkammer mit dem darin befindlichen Filtereinsatz der Rückspülposition innerhalb der Rückspülzone Z befindet, die sich etwa über ein Viertel der kreisförmigen Umlaufbahn des Drehkörpers 9 im Filtergehäuse 1 erstreckt (Fig. 2). Der vorgenannte Rückspülkanal 28 endet am Fußstück 2 in einer Axialbohrung, in der eine federbelastete Dichtbuchse 29 axialverschieblich angeordnet ist, die durch die Federkraft dichtend gegen die Unterseite der Lochplatte 17 gedrückt wird und damit die Plattenöffnung 18, an der sich die in der Rückspülzone befindliche Filterkerze befindet, gegenüber der Lochplatte abdichtet, so daß ein vom Filterkreislauf unabhängiger Rückspülkreislauf gebildet wird. Am oberen Ende weist das Filtergehäuse 1 eine radiale Gehäuseerweiterung auf, die einen Kopfraum 30 bildet, der über die Durchflußöffnung 25 der in der Rückspülzone befindlichen Filterkammer 11 mit dieser in Verbindung steht und an dem sich ein an sich bekanntes Entlüftungsventil 31 befindet, welches durch einen im Kopfraum angeordneten Schwimmer 32 gesteuert ist, wie dies bei Rückspülfiltern an sich bekannt ist.

Im unteren Endbereich der in der Rückspülzone befindlichen Filterkammer 11 ist diese über die hier angeordnete Durchflußöffnung 25 und eine zugeordnete Öffnung in der Wandung des Filtergehäuses 1 mit der Rückspülvorrichtung 7 und deren Schlammablauf 8 verbunden.

Die auf dem Teilumfangsbereich der Rückspülzone außenseitig am Filtergehäuse 1 angebaute Rückspülvorrichtung 7 weist ein kombiniertes Rückspül- und Schlammablaßventil auf mit den beiden über einen Kolbenschaft einstückig verbundenen Ventilkörpern 33 und 34, wobei der Ventilkörper 33 mit den ihm zugeordneten Ventilsitz 36 ein Druckgas- bzw. Druckluftventil bildet, welches in einer Verbindung zwischen einem an der Rückspülvorrichtung 7 angeordneten Druckgasspeicher 35 mit dem Rückspülkanal 28 angeordnet ist, der über die entsprechende Öffnung in der Lochplatte 17 mit dem Innenraum der in der Rückspülposition befindlichen Filterkerze steht. Der Ventilkörper 34, dessen Ventilsitz mit 37 bezeichnet ist, bildet das Schlammablaßventil und steuert somit im Rückspülbetrieb den Schlammablauf 8. Der Druckgasspeicher 35 ist zu seiner Aufladung mit dem Druckgas bzw. der Druckluft an ein Druckgas- bzw. Druckluftzuführungssystem 38 mit zugeordnetem Steuerventil 39 angeschlossen. An das gleiche Druckgas- bzw. Druckluftsystem 38 ist über ein Steuerventil 40 der als Druckgas- bzw. Druckluftmotor ausgebildete Drehantrieb 4 angeschlossen. Im gezeigten Ausführungsbeispiel bestehen die beiden Steuerventile 39 und 40 jeweils aus einem Schaltventil, das sowohl von Hand als auch elektromagnetisch steuerbar ist, um die Druckgasverbindungen herzustellen und zu schließen.

In Fig. 1 angedeutet ist eine Differenzdruck-Meßvorrichtung 41, die im laufenden Filterbetrieb die Drücke am Trübeeinlaß 5 und am Filtratauslaß 6 erfaßt und aus den ermittelten Druckwerten das jeweilige Schaltsignal in die Steuerung gibt, so daß bei einem vorgegebenen Differenzdruck, welcher bestimmend ist für den Verschmutzungsgrad der Filtereinheiten, der Drehantrieb 4 über das Steuerventil 40 aktiviert und damit der Drehkörper 9 mit dem gesamten Filtereinsatz um einen Teilbereich im Filtergehäuse 1 weitergedreht wird, in der die nächstfolgende Filterkammer mit ihrem Filtereinsatz in die Rückspülzone gelangt und hier abgereinigt wird.

Im Filterbetrieb sind von den im gezeigten Ausführungsbeispiel vier auf einem gemeinsamen Kreisbogen angeordneten Filterkammern 11 jeweils drei auf einem gemeinsamen Bogenumfang von etwa 270° liegende Filterkammern 11 an den gemeinsamen Filterkreislauf angeschlossen, so daß die über die Trübeeinlaß 5 zuströmende Schmutzflüssigkeit, wie in Fig. 1 durch die Pfeile angedeutet, im Zuflußkanal 26 von oben und von unten über die Durchlaßöffnungen 25 in die drei Filterkammern einströmt und innerhalb dieser Filterkammern die Filtereinsätze bzw. Filterkerzen von außen nach innen durchströmen, wobei der ausgefilterte Schmutz an der äußeren Oberfläche der Filtereinsätze abgelagert wird. Das Filtrat fließt in den drei Filterkerzen nach unten und über die zugeordneten Plattenöffnungen 18 in die gemeinsame Filtratkammer 19 und über den Filtratauslaß 6 aus dem Rückspülfilter, z.B. zu einem Verbraucher. Gleichzeitig zu dem Filterbetrieb wird die vierte Filterkammer 11 mit dem hierin befindlichen Filtereinsatz 12 in der Rückspülzone rückgespült, wie dies in Fig. 1 ebenfalls durch Pfeile angegeben ist. Dabei wird das kombinierte Spül- und Schlammablaßventil z.B. durch Druckluftansteuerung in die gezeigte Öffnungsposition gebracht, in der das Druckgas- bzw. die Druckluft aus dem Speicherraum 35 über das geöffnete Ventil 33 und den Rückspülkanal 28 von unten in die genannte Filterkerze schlagartig einströmt und dabei das in dieser Filterkerze befindliche Filtrat schlagartig beschleunigt, so daß es aus der Filterkerze nach außen ausgetrieben wird und der außenseitig an der Filterkerze anhaftende Schmutz abgetragen wird. Das Spülfiltrat mit dem Schmutz wird dann über die untere Durchlaßöffnung 25 und das geöffnete Schlammablaßventil 34, 37 in den Schlammablauf 8 abgeführt, wie dies in Fig. 1 ebenfalls durch Pfeile angedeutet ist. Zusätzlich kann durch die stoßartige Druckgasführung in die genannte Filterkammer die hier in dieser noch an der Außenseite der Filterkerze befindliche Trübe bzw. Schmutzflüssigkeit mit dem Schmutz zum Schlammablauf hin ausgetragen werden. Bei Entleerung der genannten Filterkammer öffnet der Schwimmer 32 das Belüftungsventil 31. Nach erfolgter Rückspülung kann dann diese Filterkammer wieder mit Trübe aufgefüllt werden, die durch eine Auffüllbohrung in die Filterkammer eingeleitet wird, wobei das schwimmergesteuerte Belüftungsventil 31 wieder schließt, sobald diese Filterkammer mit Spülflüssigkeit wieder gefüllt ist. Die Auffüllbohrung 43 kann beispielsweise als Radialbohrung an der jeweiligen Dichtbuchse 29 angeordnet sein, die die Verbindung zur Filtratkammer 29 herstellt. Diese Anordnung ist möglich, weil der Druck auf der Filtratseite höher ist als der Druck im Rückspülkreislauf. Die abgereinigte und wieder aufgefüllte Filterkammer verbleibt in der Rückspülzone, bis z.B. handgesteuert oder automatisch gesteuert der Drehantrieb 4 den Drehkörper 9 zusammen mit dem gesamten Filtereinsatz um einen weiteren Takt, hier um etwa 90,° weiterdreht und damit die nächstfolgende Filterkammer mit ihrem Filtereinsatz in die Rückspülzone gelangt, während die zuvor rückgespülte Filterkammer mit ihrem Filtereinsatz hierbei aus der Filterzone herausgeführt und wieder in die Filtrierzone gelangt, in der sie zusammen mit den beiden weiteren Filterkammern für den kontinuierlichen Filterbetrieb zur Verfügung steht.

Fig. 1 läßt erkennen, daß in dem Fußstück 2 des Filtergehäuses 1 eine Beheizungskammer 42 angeordnet werden kann, in die bzw. durch die ein Heizmedium eingeführt bzw. durchgeführt werden kann, um im Bedarfsfall eine Filterbeheizung und damit eine Beheizung der zu filternden Flüssigkeit vornehmen zu können.

Der erfindungsgemäße Rückspülfilter kann sowohl durch Handbetätigung als auch im vollautomatischen Betrieb arbeiten, auch in einer Kombination von Handbetrieb und vollautomatischen Betrieb, im letztgenannten Fall zweckmäßig durch differenzdruckabhängige und/oder zeitabhängige Steuerung des Drehantriebs und der Rückspülvorrichtung. Bei Verwendung eines pneumatischen Drehantriebs kann ein einfacher Druckluft-Schwenkantrieb vorgesehen werden, der bei seiner Druckluftbeaufschlagung den Drehkörper mit den gesamten Filtereinheiten lediglich um einen Teilschritt dreht, der einem Teilweg der gesamten Umlaufbahn entspricht, bei dem beschriebenen Rückspülfilter mit vier Filterkammern und Filtereinsätzen einem Bogenweg von etwa 90°. Bei der Rückspülung mit Druckluftbeschleunigung der Spülflüssigkeit kann mit einer kurzen Nachblaszeit der Druckluftzuführung in die betreffende Filterkammer gearbeitet werden, um den Schlamm vollständig aus der Filterkammer auszublasen. Nach Abreinigung der Filterkerze wird dann die noch in der Rückspülzone verbleibende Filterkammer, wie beschrieben, wieder aufgefüllt, und zwar entweder mit der über den Filtereinlaß zugeführten Trübe oder mit Filtrat, welches in die zuvor abgereinigte Filterkerze eingeführt wird.

Es versteht sich, daß die Erfindung aus das vorstehend beschriebene Ausführungsbeispiel nicht beschränkt ist, sondern Änderungen erfahren kann, ohne den Rahmen der Erfindung zu verlassen. Selbstverständlich kann der erfindungsgemäße Rückspülfilter auch mit einer anderen Anzahl an Filtereinsätzen bzw. Filterkammern ausgestattet sein. Insbesondere bei Rückspülfiltern hoher Filterleistungen und entsprechend großer Anzahl an Filterkammern und Filtereinsätzen können auf der gemeinsamen Umlaufbahn auch mehr als nur eine einzige Rückspülzone vorgesehen werden, z.B. zwei Rückspülzonen. Der beschriebene Rückspülfilter kann, wie ersichtlich, sehr kompakt ausgeführt werden. Alle Filtereinsätze lassen sich leicht aus dem Filtergehäuse herausnehmen, indem das Kopfstück abgebaut wird, so daß der gesamte Drehkörper mit den daran angeordneten Filterkammern und Filtereinsätzen nach oben aus dem Filtergehäuse 1 herausgehoben werden kann. Anzumerken ist noch, daß die bei dem vorstehend beschriebenen Rückspülfilter befindliche Rückspülzone in den Fig. 2 und 4 durch den Bogenpfeil Z angegeben ist.

## Patentansprüche

1. Rückspülfilter mit einem mit Trübeeinlass und Filtratauslass versehenen Filtergehäuse und mit einer mit Spül- und Ablassventil versehenen Rückspülvorrichtung, wobei im Filtergehäuse mehrere Filtereinsätze, wie insbesondere Filterkerzen, parallel zueinander angeordnet sind, die im laufenden Filterbetrieb unabhängig voneinander mit einem Spülmedium rückspülbar sind, und wobei die Filtereinsätze mittels eines Stellantriebs auf einer gemeinsamen Umlaufbahn, die auf mindestens einem Teilabschnitt ihrer. Länge eine Rückspülzone aufweist, bewegbar sind und nach erfolgter Rückspülung in den Filterbetrieb zurückstellbar sind, **dadurch gekennzeichnet, daß** im Filterbetrieb die Trübe die Filtereinsätze (12) von außen nach innen durchströmt, wobei der ausgefilterte Schmutz an der äußeren Oberfläche der Filtereinsätze (12) abgelagert wird, und bei der Umlaufbewegung in der Rückspülzone (Z) für die Rückspülung eine von dem Filterkreislauf abgetrennte Rückspülkammer gebildet wird, in der die Filtereinsätze einzeln oder gruppenweise im Gegenstrom zum Filterbetrieb rückspülbar sind.

2. Rückspülfilter nach Anspruch 1, **dadurch gekennzeichnet, daß** die Filtereinsätze (12) jeweils in einer Filterkammer (11) angeordnet sind,wobei die Filterkammern (11) auf dem Teilbereich der Umlaufbahn, auf dem die Filterung erfolgt, über einen ringsegmentförmigen Kanal (26), der an den gemeinsamen Trübeeinlass (5) angeschlossen ist, anströmbar sind.

3. Rückspülfilter nach Anspruch 2, **dadurch gekennzeichnet, daß** die Filtereinsätze (12) und die sie aufnehmenden Filterkammern (11) an einen gemeinsamen, vom Stellantrieb (4) angetriebenen Filterträger über die Umlaufbahn beweglich angeordnet sind.

4. Rückspülfilter nach Anspruch 3, **dadurch gekennzeichnet, daß** der Filterträger aus einem im Filtergehäuse (1) angeordneten Drehkörper (9) besteht, an dem die Filtereinsätze (12) um dessen Drehachse (10) herum angeordnet sind, wobei der Stellantrieb (4) aus einem den Drehkörper (9) um die Drehachse (10) drehenden Drehantrieb besteht und die Rückspülzone (Z) sich über ein Teilumfang der kreisförmigen Umlaufbahn des Drehkörpers (9) erstreckt.

5. Rückspülfilter nach Anspruch 4, **dadurch gekennzeichnet, daß** der Drehkörper (9) mit über seinen Umfang herum in Bogenabständen zueinander angeordneten Filterkammern (11) versehen ist, die jeweils einen Filtereinsatz (12) aufnehmen und zu dem Trübeeinlaß (5) und dem Filtratauslaß (6) sowie mit der Rückspülung dienenden Durchlaßkanälen (25) versehen sind.

6. Rückspülfilter nach Anspruch 5, **dadurch gekennzeichnet, daß** der Drehkörper (9) mit zu seiner Drehachse parallelen, in gleichen Bogenabständen zueinander angeordneten, die Filterkammern (11) bildenden Taschen versehen ist.

7. Rückspülfilter nach einem der Ansprüche 4 bis 6, **dadurch gekennzeichnet, daß** die von dem Drehkörper (9) gebildeten Filterkammern (11) auf dem Bogenbereich der Rückspülzone (Z) durch zusammenwirkende, koaxial zur Drehachse (10) des Drehkörpers (9) verlaufende Dichtflächen am Drehkörper (9) und am Filtergehäuse (1) gegenüber dem Filterkreislauf der im Filtersystem befindlichen Filterkammern (11) und gegenüber dem zu dem Trübeeinlaß (5) führenden Kanal (26) im Filtergehäuse (1) abgetrennt und abgedichtet sind, um die Rückspülkammer zu bilden.

8. Rückspülfilter nach einem der Ansprüche 4 bis 7, **dadurch gekennzeichnet, daß** die Filterkammern (11) an einem Ende oder an beiden Enden des Drehkörpers (9) zu der Innenseite des Filtergehäuses (1) unter Bildung der Durchflußkanäle (25) offen sind und der Drehkörper (9) zwischen den Enden im Querschnitt sternförmig ausgebildet ist.

9. Rückspülfilter nach Anspruch 8, **dadurch gekennzeichnet, daß** der Drehkörper (9) im Bereich seiner radialen Durchflußkanäle (25) mit zur Drehachse (10) koaxialen ringförmigen Dichtflächen (24) versehen ist, die nur im Bogenbereich der Rückspülzone (Z) mit innenseitig des Filtergehäuses angeordneten stehenden Gegendichtflächen (27) in Dichtanlage stehen, auf dem sonstigen Umfangsbereich ohne Dichtanlage zur Innenseite des Filtergehäuses (1) sind.

10. Rückspülfilter nach Anspruch 9, **dadurch gekennzeichnet, daß** die Gegendichtflächen (27) von sich nur über den Bogenbereich der Rückspülzone (Z) erstreckenden, in Richtung der Drehachse (10) des Drehkörpers (9) axial zueinander versetzten bogenförmigen Gehäuseflächen gebildet sind.

11. Rückspülfilter nach einem der Ansprüche 8 bis 10, **dadurch gekennzeichnet , daß** der Drehkörper (9) auf dem Län-genbereich, auf dem seine Filterkammern (11) zur Innenseite des Filtergehäuses (1) geschlossen sind, unter Bildung eines mit dem gemeinsamen Trübeeinlaß (5) verbundenen Innenkanals (26) im Radialabstand zur Innenwandung des Filtergehäuses (1) angeordnet ist.

12. Rückspülfilter nach einem der Ansprüche 4 bis 11, **dadurch gekennzeichnet, daß** der Drehkörper (9) an seinen beiden Enden mit drehfest an ihm angeordneten Verschlußstücken versehen ist.

13. Rückspülfilter nach Anspruch 12, **dadurch gekennzeichnet, daß** das am Ende des Stellantriebs (4) angeordnete, die Filterkammern (11) schließende Verschlußstück als lösbar am Drehkörperende angeschlossene Kupplungsplatte (13) ausgebildet ist, mit der die Welle des Drehantriebs (4) axial lösbar drehschlüssig kuppelbar ist.

14. Rückspülfilter nach Anspruch 12 oder 13, **dadurch gekennzeichnet, daß** das am anderen Ende des Drehkörpers (8) angeordnete Verschlußstück als eine Lochplatte (17) ausgebildet ist, die den Träger der aus Filterkerzen bestehenden Filtereinsätze (12) bildet und deren Plattenöffnungen (18) die Verbindung der Innenräume der Filterkerzen mit dem gemeinsamen Filtratauslaß (6) bzw. dem Spülmitteleinlaß herstellen.

15. Rückspülfilter nach Anspruch 14, **dadurch gekennzeichnet, daß** die Lochplatte (17) ein Drehlager für den Drehkörper (9) bildet, und in einem Lagerring (23) angeordnet ist, der in einer Lagerfläche (20) des Filtergehäuses dichtend und drehbar gelagert ist.

16. Rückspülfilter nach Anspruch 14 oder 15, **dadurch gekennzeichnet, daß** die Lochplatte (17) zwischen dem Trübeeinlaß (5) und dem Filtratauslaß (6) im Filtergehäuse angeordnet ist.

17. Rückspülfilter nach einem der Ansprüche 1 bis 16, **dadurch gekennzeichnet, daß** die Rückspülvorrichtung (7) auf dem Bogenbereich der Rückspülzone (Z) außenseitig am Filtergehäuse (1), leicht lösbar, angeschlossen ist.

18. Rückspülfilter nach einem der Ansprüche 1 bis 17, **dadurch gekennzeichnet, daß** der Drehantrieb (4) an einem das Filtergehäuse (1) kopfseitig verschließenden und lösbar am Filtergehäuse (1) angeordneten Kopfstück (3) angeordnet ist.

19. Rückspülfilter nach einem der Ansprüche 1 bis 18, **dadurch gekennzeichnet, daß** das Filtergehäuse (1) an seinem dem Drehantrieb (4) gegenüberliegenden Ende durch ein lösbares Fußstück (2) verschlossen ist.

20. Rückspülfilter nach Anspruch 19, **dadurch gekennzeichnet, daß** am Fußstück (2) der Filtratauslaß (6) angeordnet ist.

21. Rückspülfilter nach Anspruch 19 oder 20, **dadurch gekennzeichnet, daß** das Fußstück (2) mit einer von einem Heizmedium durchströmten Beheizungskammer (42) versehen ist.

22. Rückspülfilter nach einem der Ansprüche 1 bis 21, **dadurch gekennzeichnet, daß** der jeweils in der Rückspülzone (Z) befindliche Filtereinsatz (12) durch ein druckgasbeaufschlagtes Medium rückspülbar ist.

23. Rückspülfilter nach einem der Ansprüche 1 bis 22, **dadurchgekennzeichnet, daß** das druckbeaufschlagte Medium das Spülfiltrat oder Trübe ist.

24. Rückspülfilter nach Anspruch 22 oder 23, **dadurch gekennzeichnet, daß** der Rückspülvorrichtung (7) ein Druckgasspeicher (35) zugeordnet ist und das Spülventil in seiner Spülschaltstellung die Druckgaskammer (35) mit der in Spülposition befindlichen Filterkammer (11) verbindet und das Schlammablaßventil (34, 37) die Verbindung dieser Filterkammer (11) mit dem Schlammablauf (8) herstellt.

25. Rückspülfilter nach einem der Ansprüche 22 bis 24, **dadurch gekennzeichnet, daß** die Druckgaszuführung zur Filtratrückspülung des in der Rückspülkammer befindlichen Filtereinsatzes (12) an deren Innenraum angeschlossen ist, wobei die betreffende Filterkammer mit einem Schlammablauf (8) verbunden ist.

26. Rückspülfilter nach einem der Ansprüche 22 bis 25, **dadurch gekennzeichnet, daß** der der Druckgaszuführung dienende Kanal (28) im Fußstück (2) angeordnet und über eine gegen die Lochplatte (17) elastisch anstellbare Dichtbuchse (29) mit der in die Filterkerze führenden Plattenöffnung (18) dichtend verbunden ist.

27. Rückspülfilter nach einem der Ansprüche 22 bis 26, **dadurch gekennzeichnet, daß** das Filtergehäuse (1) an dem der Druckgaszuleitung gegenüberliegenden Ende mit einem mit der in der Spülzone liegenden Filterkammer (11) verbundenen Kopfraum (30) mit schwimmergesteuertem Belüftungsventil (31) aufweist.

28. Rückspülventil nach einem der Ansprüche 1 bis 27, **dadurch gekennzeichnet, daß** der Drehantrieb (4) aus einem gesteuerten Schrittschaltmotor, insbesondere einem pneumatischem Motor, besteht.

## Claims

1. Backflush filter comprising a filter housing with a slurry inlet and filtrate outlet as well as a backflushing device with flushing and drain valve means, there being provided inside said filter housing, in a reciprocally parallel arrangement, a plurality of filter elements such as, specifically, filter cartridges, adapted to backflushing with a flushing medium, said filter elements being displaceable via an actuating drive on a common revolving path that includes a backflushing zone in at least one section of its length, and being returnable to filtering mode upon completion of such backflushing cycle, **characterized in that** in filtering mode the slurry passes the filter elements (12) from the outside to the inside thereof, with contaminants removed by the filter being deposited at the outer surface of said filter elements, while during the revolving movement a backflushing chamber separated from the filter circuit is formed in the backflushing zone (Z) for the backflushing cycle, allowing the filter elements to be backflushed individually or in groups in a flow direction opposed to that prevailing in filtering mode.

2. Backflush filter according to Claim 1, **characterized in** the filter elements (12) are each arranged in a filter chamber (11), said filter chambers being connectable to the slurry flow **in that** portion of the revolving path in which filtration takes place, via a duct (26) having the form of a ring segment.

3. Backflush filter according to Claim 2, **characterized in that** the filter elements (12) and the filter chambers (11) receiving them are connected to a common filter carrier driven by the actuating drive (4) so as to be displaceable along the revolving path (4).

4. Backflush filter according to Claim 3, **characterized in that** the filter carrier consists of a rotary body (9) arranged in the filter housing, with the filter elements (12) being attached to said rotary body around its axis of rotation (10), the actuating drive (4) consisting of a rotary drive causing the rotary body (9) to turn around said rotary axis (10), and the backflushing zone (Z) extending over a portion of the circumference of the circular revolving path of said rotary body (9).

5. Backflush filter according to Claim 4, **characterized in that** the rotary body (9) comprises filter chambers (11) arranged in arcuate distances along its circumference, with said filter chambers, accommodating one filter element (12) each, being connected to the slurry inlet (5) and filtrate outlet (6) and comprising backflushing passages (25).

6. Backflush filter according to Claim 5, **characterized in that** the rotary body (9) comprises a plurality of pockets arranged parallel to its axis of rotation at equal arcuate distances, said pockets forming the filter chambers (11).

7. Backflush filter according to any of Claims 4 through 6, **characterized in that** in the arcuate area of the backflushing zone (Z), the filter chambers (11) formed by the rotary body (9) are separated from and sealed against the filter circuit of the filter chambers then in the filter system (11), and against the duct (26) in the filter housing (1) connecting to the slurry inlet, by interacting sealing surfaces arranged on the rotary body (9) and on the filter housing (1) coaxially with the rotary axis (10) of said rotary body, so that the backflushing chamber is formed.

8. Backflush filter according to any of Claims 4 through 7, **characterized in that** the filter chambers (11) are open at one or both ends of the rotary body (8) toward the inside of the filter housing (1), forming the passages (25), and that the rotary body (9) exhibits a star-shaped cross section between said ends.

9. Backflush filter according to Claim 8, **characterized in that** the rotary body (9), in the area of its radial passages (25), comprises annular sealing surfaces (24) coaxial with the rotary axis (10), said surfaces being in sealing engagement, in the arcuate area of the backflushing zone (Z) only, with mating sealing surfaces (27) extending in an upright direction inside the filter housing, while in the remaining circumferential area they do not thus sealingly engage the inside of the filter housing (1).

10. Backflush filter according to Claim 9, **characterized in that** said mating sealing surfaces (27) are formed by arcuate housing surfaces extending along the arcuate area of the backflushing zone (Z) only, said arcuate housing surfaces being axially offset relative to each other in the direction of the rotary axis (10) of the rotary body (9).

11. Backflush filter according to any of Claims 8 through 10, **characterized in that** the rotary body (9) extends at a radial distance to the interior wall of the filter housing (1) **in that** portion of its length in which its filter chambers (11) are closed toward the inside of the filter housing (1), forming an interior duct (26) connected to the common slurry inlet (5).

12. Backflush filter according to any of Claims 4 through 11, **characterized in that** the rotary body (9) exhibits closure members attached to each of its ends in a torsionally rigid manner.

13. Backflush filter according to Claim 12, **characterized in that** the closure member arranged at the end of the actuating drive (4) to close off the filter chambers (11) is in the form of a coupling plate (13) detachably connected to the end of the rotary body such that the shaft of the actuating drive (4) can be detachably coupled to it in a torsionally rigid but axially detachable manner.

14. Backflush filter according to Claims 12 or 13, **characterized in that** the closure member arranged at the other end of the rotary body (8) is in the form of a perforated plate (17) serving as carrier for the filter elements (12) consisting of filter cartridges, the orifices (18) of such plate connecting the interior of the filter cartridges to the common filtrate outlet (6) or flushing medium inlet, respectively.

15. Backflush filter according to Claim 14, **characterized in that** the perforated plate (17) forms a pivot bearing for the rotary body (9) and is arranged in a bearing ring (23) arranged sealingly and rotatably in a bearing surface (20) of the filter housing.

16. Backflush filter according to Claim 14 or 15, **characterized in that** the perforated plate (17) is arranged in the filter housing between the slurry inlet (5) and the filtrate outlet (6).

17. Backflush filter according to any of Claims 1 through 16, **characterized in that** the backflushing device (7) is secured to the outside of the filter housing in an easily detachable manner, in the arcuate area of the backflushing zone (Z).

18. Backflush filter according to any of Claims 1 through 17, **characterized in that** the rotary drive (4) is arranged on a head member (3) which closes off the filter housing (1) on the head side thereof and is detachably secured to said filter housing (1).

19. Backflush filter according to any of Claims 1 through 18, **characterized in that** the filter housing is closed off with a detachable base member (2) at its end opposite from the actuating drive (4).

20. Backflush filter according to any of Claim 19, **characterized in that** the filtrate outlet (6) is arranged on said base member (2).

21. Backflush filter according to any of Claims 19 or 20, **characterized in that** the base member (2) comprises a heating chamber (42) through which a heating fluid can be passed.

22. Backflush filter according to any of Claims 1 through 21, **characterized in that** the filter element (12) resting in the backflushing zone (Z) at a given time can be backflushed with a gas-pressurized medium.

23. Backflush filter according to any of Claims 1 through 22, **characterized in that** the pressurized medium is the flushing filtrate or slurry.

24. Backflush filter according to Claim 22 or 23, **characterized in that** the backflushing device (7) is associated with a compressed-gas storage vessel (35), and that the flushing valve, in its flushing mode position, connects the pressurized gas chamber (35) to the filter chamber (11) currently in the flushing position, and that the sludge drain valve (34,37) connects this filter chamber (11) to the sludge drain (8).

25. Backflush filter according to any of Claims 22 through 24, **characterized in that** the compressed gas supply used for filtrate backflushing of the filter element (12) currently in the backflushing chamber is connected to the interior side thereof, with the respective filter chamber communicating with a sludge drain (8).

26. Backflush filter according to any of Claims 22 through 25, **characterized in that** the compressed gas supply duct (28) is arranged in the base member (2) and sealingly connects to the plate orifice (18) leading to the interior of the filter cartridge, such sealing connection being made via an elastic sealing bush (29) that can be adjusted to press against the perforated plate (17).

27. Backflush filter according to any of Claims 22 through 26, **characterized in that** the filter housing (1), at its end remote from the compressed gas supply, comprises a head chamber (30) with a float-controlled venting valve (31), said head chamber being in communication with the filter chamber (11) currently in the flushing zone.

28. Backflush filter according to any of Claims 1 through 27, **characterized in that** the rotary drive (4) consists of a controlled stepper motor, specifically a pneumatic motor.

## Revendications

1. Filtre à lavage à contre-courant comportant un boîtier de filtre pourvu d'une entrée de milieu trouble et d'une sortie de filtrat et comportant un dispositif de lavage à contre-courant pourvu d'une soupape de lavage et d'évacuation, plusieurs garnitures de filtre, telles qu'en particulier des bougies de filtre disposées dans le boîtier de filtre, parallèlement les unes aux autres, qui peuvent être lavées à contre-courant au cours du filtrage, indépendamment les unes des autres au moyen d'un fluide de lavage, et dans lequel les garnitures de filtre sont déplaçables, au moyen d'un mécanisme de réglage, sur une voie de circulation commune qui comporte une zone de lavage à contre-courant sur au moins une partie de sa longueur, et pouvant être replacées en mode filtrage, à l'achèvement du lavage à contre-courant, **caractérisé en ce qu'**en mode filtrage le milieu trouble s'écoule à travers les garnitures de filtre (12), de l'extérieur vers l'intérieur, les impuretés filtrées se déposant sur la surface supérieure des garnitures de filtre (12), et pendant le mouvement de circulation dans la zone de lavage à contre-courant (Z), il est formé pour le lavage à contre-courant une chambre de lavage à contre-courant séparée du circuit de filtrage, dans laquelle les garnitures de filtre peuvent être lavées, individuellement ou groupées, à contre-courant par rapport au mode de filtrage.

2. Filtre à lavage à contre-courant selon la revendication 1, **caractérisé en ce que** les garnitures de filtre (12) sont disposées chacune dans une chambre de filtre (11), le courant arrivant sur les chambres de filtre (11) sur la zone partielle de la voie de circulation sur laquelle s'effectue le filtrage, à travers une canal (26) en forme de segment d'anneau qui est raccordé à l'entrée de milieu trouble (5) commune.

3. Filtre à lavage à contre-courant selon la revendication 2, **caractérisé en ce que** les garnitures de filtre (12) et les chambres de filtre (11) les recevant sont disposées sur un support de filtre commun, entraîné par le mécanisme de réglage (4), de manière déplaçable sur la voie de circulation.

4. Filtre à lavage à contre-courant selon la revendication 3, **caractérisé en ce que** le support de filtre est constitué d'un corps tournant (9), disposé dans le boîtier de filtre (1), sur lequel les garnitures de filtre (12) sont disposées autour de son axe de rotation (10), le mécanisme de réglage (4) étant constitué d'un dispositif d'entraînement en rotation faisant tourner le corps tournant (9) autour de l'axe de rotation (10), et la zone de lavage à contre-courant (Z) s'étendant sur une circonférence partielle de la voie de circulation en forme de cercle du corps tournant (9).

5. Filtre à lavage à contre-courant selon la revendication 4, **caractérisé en ce que** le corps tournant (9) est pourvu de chambres de filtre (11), disposées sur sa circonférence, à des distances d'arc les unes des autres, lesquelles reçoivent chacune une garniture de filtre (12) et sont pourvues de l'entrée de milieu trouble (5) et de la sortie de filtrat (6) ainsi que de canaux de passage (25) servant au lavage à contre-courant.

6. Filtre à lavage à contre-courant selon la revendication 5, **caractérisé en ce que** le corps tournant (9) est pourvu de poches parallèles à son axe de rotation, disposées à de mêmes distances d'arc les unes des autres et formant les chambres de filtre (11).

7. Filtre à lavage à contre-courant selon l'une des revendications 4 à 6, **caractérisé en ce que** les chambres de filtre (11) formées par le corps tournant (9) sont séparées et rendues étanches, sur la partie en arc de la zone de lavage à contre-courant (Z), par des surfaces d'étanchéité coopérantes, s'étendant coaxialement à l'axe de rotation (10) du corps tournant (9) et sur le boîtier de filtre (1), par rapport au circuit de filtrage des chambres de filtre (11) se trouvant dans le système de filtrage, et par rapport au canal (26) menant à l'entrée de milieu trouble (5), dans le boîtier de filtre (1), afin de former la chambre de lavage à contre-courant.

8. Filtre à lavage à contre-courant selon l'une des revendications 4 à 7, **caractérisé en ce que** les chambres de filtre (11), à une extrémité ou aux deux extrémités du corps tournant (9), sont ouvertes vers le côté intérieur du boîtier de filtre (1) et forment les canaux de passage (25), et entre les extrémités, le corps tournant (9) présente une section transversale en étoile.

9. Filtre à lavage à contre-courant selon la revendication 8, **caractérisé en ce que** dans la zone de ses canaux de passage (25) radiaux, le corps tournant (9) est pourvu de surfaces d'étanchéité (24) de forme annulaire, coaxiales à l'axe de rotation (10) et qui ne sont en contact étanche, que dans la partie en arc de la zone de lavage à contre-courant (Z), avec des contre-surfaces d'étanchéité (27) disposées sur le côté intérieur du boîtier de filtre, tandis que sur le reste de la partie périphérique, elles ne sont pas en contact étanche avec le côté intérieur du boîtier de filtre (1).

10. Filtre à lavage à contre-courant selon la revendication 9, **caractérisé en ce que** les contre-surfaces d'étanchéité (27) sont formées par des surfaces de boîtier en arc décalées axialement l'une par rapport à l'autre dans la direction de l'axe de rotation (10) du corps tournant (9) et s'étendant uniquement sur la partie en arc de la zone de lavage à contre-courant (Z).

11. Filtre à lavage à contre-courant selon l'une des revendications 8 à 10, **caractérisé en ce que** le corps tournant (9) est disposé à distance radiale de la paroi intérieure du boîtier de filtre (1), sur la partie de sa longueur sur laquelle ses chambres de filtre (11) sont fermées vers le côté intérieur du boîtier de filtre (1), en formant un canal intérieur (26) relié à l'entrée de milieu trouble (5) commune.

12. Filtre à lavage à contre-courant selon l'une des revendications 4 à 11, **caractérisé en ce que** le corps tournant (9) est pourvu, à ses deux extrémités, de pièces d'obturation disposées solidairement en rotation sur celui-ci.

13. Filtre à lavage à contre-courant selon la revendication 12, **caractérisé en ce que** la pièce d'obturation qui est disposée à l'extrémité du mécanisme de réglage (4) et qui ferme les chambres à filtre (11), est réalisée en tant que plaque d'accouplement (13) raccordée à l'extrémité du corps tournant, au moyen de laquelle l'arbre du dispositif d'entraînement en rotation (4) peut être accouplé en rotation, de manière séparable axialement.

14. Filtre à lavage à contre-courant selon la revendication 12 ou 13, **caractérisé en ce que** la pièce d'obturation disposée à l'autre extrémité du corps tournant (9) est réalisée sous la forme d'une plaque perforée (17) qui forme le support des garnitures de filtre (12), constituées de bougies de filtre, et dont les ouvertures de plaque (18) réalisent la liaison entre les volumes intérieurs des chambres de filtre et la sortie de filtrat (6) commune ou l'entrée de fluide de lavage.

15. Filtre à lavage à contre-courant selon la revendication 14, **caractérisé en ce que** la plaque perforée (17) forme un palier tournant pour le corps tournant (9) et est disposée dans une bague de palier (23) qui est montée de manière étanche et tournante dans une surface de palier (20) du boîtier de filtre.

16. Filtre à lavage à contre-courant selon la revendication 14 ou 15, **caractérisé en ce que** la plaque perforée (17) est disposée dans le boîtier de filtre, entre l'entrée de milieu trouble (5) et la sortie de filtrat (6).

17. Filtre à lavage à contre-courant selon l'une des revendications 1 à 16, **caractérisé en ce que** le dispositif de lavage à contre-courant (7) est raccordé, sur la partie en arc de la zone de lavage à contre-courant (Z), du côté extérieur du boîtier de filtre (1), de manière facilement amovible.

18. Filtre à lavage à contre-courant selon l'une des revendications 1 à 17, **caractérisé en ce que** le dispositif d'entraînement en rotation (4) est disposé sur une pièce de tête (3) qui ferme côté tête le boîtier de filtre (1) et qui est disposée, de manière amovible, sur le boîtier de filtre (1).

19. Filtre à lavage à contre-courant selon l'une des revendications 1 à 18, **caractérisé en ce que** le boîtier de filtre (1) est fermé, à son extrémité opposée au dispositif d'entraînement en rotation (4), par une pièce de pied (2) amovible.

20. Filtre à lavage à contre-courant selon la revendication 19, **caractérisé en ce que** la sortie de filtrat (6) est disposée sur la pièce de pied (2).

21. Filtre à lavage à contre-courant selon la revendication 19 ou 20, **caractérisé en ce que** la pièce de pied (2) est pourvue d'une chambre de chauffage (42) traversée par une fluide de chauffage.

22. Filtre à lavage à contre-courant selon l'une des revendications 1 à 21, **caractérisé en ce que** la garniture de filtre (12) qui se trouve dans la zone de lavage à contre-courant (Z) peut être lavée à contre-courant par un fluide sollicité par un gaz comprimé.

23. Filtre à lavage à contre-courant selon l'une des revendications 1 à 22, **caractérisé en ce que** le fluide sollicité par une pression est le filtrat de lavage ou le milieu trouble.

24. Filtre à lavage à contre-courant selon la revendication 22 ou 23, **caractérisé en ce qu'**au dispositif de lavage à contre-courant (7) est associé un accumulateur de gaz sous pression (35) et la soupape de lavage, dans sa position de lavage, relie la chambre de gaz sous pression (35) à la chambre de filtre (11) se trouvant en position de lavage, et la soupape d'échappement des boues (34, 37) réalise la liaison de cette chambre de filtre (11) avec l'évacuation des boues (8).

25. Filtre à lavage à contre-courant selon l'une des revendications 22 à 24, **caractérisé en ce que** l'amenée de gaz sous pression au lavage à contre-courant du filtrat de la garniture de filtre (12) se trouvant dans la chambre de lavage à contre-courant, est raccordée à son volume intérieur, la chambre de filtre concernée étant reliée à une évacuation des boues (8).

26. Filtre à lavage à contre-courant selon l'une des revendications 22 à 25, **caractérisé en ce que** le canal (28), qui sert à l'amenée du gaz sous pression, est disposé dans la pièce de pied et est relié, de manière étanche, à travers une douille d'étanchéité (29) ajustable élastiquement contre la plaque perforée (17), à l'ouverture de plaque (18) qui mène à la bougie de filtre.

27. Filtre à lavage à contre-courant selon l'une des revendications 22 à 26, **caractérisé en ce que** le boîtier de filtre (1) comporte, à l'extrémité opposée à la conduite d'arrivée de gaz sous pression, un espace de tête (30) relié à la chambre de filtre (11) située dans la zone de lavage, avec soupape de purge d'air (31) commandée au moyen d'un flotteur.

28. Soupape de lavage à contre-courant selon l'une des revendications 1 à 27, **caractérisée en ce que** le dispositif d'entraînement en rotation (4) est constitué d'un moteur pas à pas commandé, en particulier un moteur pneumatique.
